# EUROPÄISCHE PATENTSCHRIFT

(11) **EP 3 408 636 B1**
(45) Veröffentlichungstag und Bekanntmachung des Hinweises auf die Patenterteilung: **17.11.2021**
(21) Anmeldenummer: 17702835.4
(22) Anmeldetag: 30.01.2017
(51) Int. Cl.: G01M 3/36, G01M 3/38, G01M 3/32

(54) **LECKSUCHE AN EINEM FLEXIBLEN PRÜFLING IN EINER FOLIENKAMMER**
LEAKAGE DETECTION ON A FLEXIBLE TEST PIECE IN A FILM CHAMBER
DÉTECTION DE FUITE AU NIVEAU D'UN ÉCHANTILLON SOUPLE DANS UNE CHAMBRE À MEMBRANE

(30) Priorität: 29.01.2016 DE 102016201359
(43) Veröffentlichungstag der Anmeldung: 05.12.2018
(73) Patentinhaber: Inficon GmbH, 50968 Köln (DE)
(72) Erfinder: WETZIG, Daniel, 50968 Köln (DE); DECKER, Silvio, 50968 Köln (DE); PUCHALLA-KÖNIG, Jochen, 50968 Köln (DE)
(74) Vertreter: dompatent von Kreisler Selting Werner - Partnerschaft von Patent- und Rechtsanwälten mbB
(86) Internationale Anmeldenummer: PCT/EP2017/051883
(87) Internationale Veröffentlichungsnummer: WO 2017/129809

(56) Entgegenhaltungen:
- EP-A1- 1 333 267
- EP-A1- 2 584 334
- WO-A1-2011/098788
- US-A1- 2010 170 326
- US-B1- 7 665 346

## Beschreibung

Die Erfindung betrifft ein Verfahren zur Lecksuche an einem flexiblen, nicht formstarren Prüfling.

Nicht formstarre Prüflinge weisen eine flexible Struktur auf, die bei Druckänderungen nachgibt. Derartige Prüflinge sind beispielsweise Lebensmittelverpackungen. Bei zu großen Druckunterschieden zwischen dem Innendruck des Prüflings und dessen Umgebungsdruck besteht die Gefahr, dass der Prüfling platzt oder zumindest beschädigt wird.

Herkömmlicherweise werden nicht formstarre Prüflinge mit einem Prüfgas gefüllt und das Prüfgas im Abgasstrom des Pumpsystems, das zur Herstellung der erforderlichen Druckdifferenzen verwendet wird, gemessen. Alternativ kann die Verwendung eines bestimmten Prüfgases entfallen, wenn der Sensor an das Füllgas innerhalb des Prüflings angepasst ist. Bei diesem Messverfahren können Einflüsse des Umgebungsgases das Messergebnis verfälschen.

In US 6,955,076 wird beschrieben, ein Leck eines Prüflings in einer Folienkammer unter Verwendung eines Prüfgases zu detektieren. Es wird beschrieben, die Schließbarkeit und die Dichtheit der Folienkammer zu verbessern, in dem in der Randzone der Folienkammer ein von der Testkammer unabhängiges Volumen evakuiert wird. Dadurch wird erreicht, dass kein Gas aus der Umgebung der Folienkammer durch Undichtigkeiten im Schließbereich der Kammer in das Testkammervolumen gelangt und das Messergebnis verfälscht.

In DE 10 2012 200 063 A1 wird ein Verfahren zur Lecksuche an einem nicht formstarren Prüfling, der in einer Folienkammer enthalten ist, beschrieben. Nach Einbringen des Prüflings in die Folienkammer wird der Druck in der Folienkammer im Bereich außerhalb des Prüflings abgesenkt. Ein Leck im Prüfling wird anhand einer räumlichen Veränderung der Folie der Folienkammer detektiert. Dabei wird die Änderung der Folienposition oder einer Volumenänderung der Folienkammer gemessen. Dieses Verfahren bietet den Vorteil, dass die Dichtheit der Folienkammer das Messergebnis nur unwesentlich beeinflusst. Es ist lediglich eine solche Dichtheit der Folienkammer zu erzielen, die das gewünschte Absenken des Drucks innerhalb der Folienkammer ermöglicht. Die Messung der räumlichen Veränderung kann durch laseroptische Messung der Position der Folienoberfläche, durch Messen der Kapazitätsänderung einer metallisierten Folienoberfläche oder durch Messen einer Berührung mit der Folienoberfläche erfolgen. Der Inhalt von DE 10 2012 200 063 A1 wird durch Bezugnahme in die vorliegende Anmeldung aufgenommen.

Bei einer Messung der räumlichen Veränderung der Folie kann insbesondere bei mehreren zugleich in der Folienkammer enthaltenen Prüflingen nicht erkannt werden, welcher der Prüflinge undicht ist. Die Messgenauigkeit hängt ab von der Varianz des Volumens von Prüfling zu Prüfling.

Der Erfindung liegt die Aufgabe zugrunde, ein verbessertes Verfahren zur Lecksuche an einem flexiblen Prüfling in einer Folienkammer bereitzustellen.

US 7,665,346 B1 beschreibt ein Verfahren und eine Vorrichtung zur Erkennung von Lecks in Blisterverpackungen unter Verwendung von Vakuum und einer optischen Messung.

EP 2 584 334 A1 beschreibt ein Luftdichtsheitstestverfahren für versiegelte Batterien, wobei die Batterien in einem luftdichten Behälter dekomprimiert und fotografiert werden.

WO 2011/098788 A1 beschreibt eine Vorrichtung zur Leckdetektion in Blistertaschen einer Blisterverpackung unter Verwendung einer Bilderfassungsvorrichtung.

EP 1 333 267 A1 beschreibt ein Leckdetektionsverfahren in einer Vakuumkammer und unter Verwendung einer optischen Kamera.

US 2010/0170326 A1 beschreibt eine Leckdetektionsvorrichtung zur Leckdetektion in Kompositmaterialien und einer Vakuumtasche und einer an der Innenseite der Vakuumtasche angebrachten Leckdetektionsschicht.

Das erfindungsgemäße Verfahren ist definiert durch Patentanspruch 1.

Gemäß Anspruch 1 wird der Druck in der Folienkammer außerhalb des Prüflings derart abgesenkt, dass sich zumindest ein Abschnitt der Folie an die äußere Kontur des in der Folienkammer enthaltenen Prüflings oder der in der Folienkammer enthaltenen Prüflinge anschmiegt. Die äußere Kontur des Prüflings beziehungsweise der Prüflinge wird dadurch auf die Folie übertragen. Mit einem Bilderfassungssystem wird diese Kontur der Folie erfasst. Die aufgenommenen Bilder der Folienkontur werden mit zuvor aufgenommenen, gespeicherten Referenzbildern verglichen, die im Fall eines dichten Prüflings mit ansonsten gleichen Randbedingungen der Messanordnung aufgenommen wurden. Das von dem Bilderfassungssystem aufgenommene Bild wird also einem Soll-Ist-Vergleich unterzogen, um undichte Prüflinge zu erkennen. Insbesondere ist es möglich, bei mehreren in der Folienkammer enthaltenen Prüflingen zu erkennen, welcher Prüfling undicht ist. Dies ist möglich, weil sich die Kontur der Folie nur im Bereich des undichten Prüflings verändert, während eine Veränderung bei dichten Prüflingen nicht oder zumindest nicht in gleichem Maße erfolgt.

Erfindungsgemäß wird die Folienoberfläche mit einem Gitter versehen, dass zum Beispiel aus in einem Raster angeordneten Punkten (Gitterstruktur) oder aus einander kreuzenden Linien gebildet wird. Im Fall der Punkte sind diese an den Kreuzungspunkten eines imaginären Gitters angeordnet.

Das Gitter kann auf die Folienoberfläche projiziert werden, zum Beispiel mit Hilfe eines Lasers oder eines anderen optischen Systems, welches das Gitter durch Licht auf der Folienoberfläche abbildet. Vorzugsweise werden mit Hilfe eines Lasers Gitterlinien auf die Folienoberfläche projiziert.

Alternativ wird das Gitter auf die Folienoberfläche fest aufgetragen, zum Beispiel durch Drucken, Prägen, Malen, usw.

Mit Hilfe eines bekannten Bildverarbeitungs- und Bilderkennungssystems werden die aufgenommenen Bilder analysiert und ausgewertet. Die Konturen und Gitter der jeweils aufgenommenen Bilder werden mit den entsprechenden Konturen und Gitter der zuvor aufgenommenen Referenzbilder verglichen.

Dabei ist der zeitliche Verlauf der Konturänderung ein Maß für die Leckrate, um die Leckrate eines erkannten Lecks zu ermitteln. Insbesondere ein leergepumpter Prüfling im Fall eines Massivlecks ist anhand der veränderten Kontur erkennbar. Beim Test mehrerer Prüflinge zur gleichen Zeit kann eine erkannte Leckage einem der Prüflinge zugeordnet werden.

Im Folgenden wird anhand der Figuren ein Ausführungsbeispiel der Erfindung näher erläutert. Es zeigen:
- Figur 1: eine Messanordnung zur Anwendung des erfindungsgemäßen Verfahrens gemäß Anspruch 1,
- Figur 2: die Kontur der Folienoberfläche im Fall eines undichten Prüflings und
- Figur 3: die Kontur der Folienoberfläche eines dichten Prüflings (Referenzbild).

Die Messanordnung besteht aus einer Folienkammer 10, in die mehrere flexible, das heißt nicht formstarre Prüflinge 12 in Form von Lebensmittelverpackungen eingebracht sind. Nach Einbringen der Prüflinge 12 in die Folienkammer 10 wird diese geschlossen, in dem die beiden die Folienkammer bildenden Folien 14, 16 mit den dazwischen liegenden Prüflingen 12 aufeinander gelegt werden und in den Randbereichen durch eine Klemmvorrichtung 18 luftdicht aufeinander gepresst werden.

Anschließend wird die Folienkammer von einer Vakuumpumpe 20, die über ein Ventil 22 mit dem Inneren der Folienkammer verbunden ist, evakuiert. Hierbei wird das Ventil 22 geöffnet und ein ebenfalls mit dem Inneren der Folienkammer 10 verbundenes Belüftungsventil 24 zur Atmosphäre hin verschlossen. Während in den Prüflingen 12 weiterhin atmosphärischer Druck herrscht, wird der Druck in dem die Prüflinge 12 umgebenen Volumen innerhalb der Folienkammer 10 um mindestens 100 mbar bezogen auf den Umgebungsdruck der Folienkammer 10 abgesenkt. Nach Absenken des Drucks in der Folienkammer wird auch das Ventil 22 geschlossen und die Pumpe 20 deaktiviert.

Mit einem in den Figuren nicht dargestellten Lasersystem wird ein aus einander kreuzenden Linien gebildetes Gitter 28 auf die Oberfläche der Folie 14 projiziert. Mit der optischen Kamera eines Bilderfassungssystems 26 wird die mit dem Gitter 28 versehene Oberfläche der Folie 14 gefilmt. Der Druck innerhalb der Folienkammer 10 im Bereich außerhalb der Prüflinge 12 wird dabei derart abgesenkt, dass sich die Folien 14, 16 an die äußere Kontur der Prüflinge 12 anschmiegen. Die äußere Kontur der Prüflinge 12 wird in die Folien 14, 16 eingedrückt und dadurch auf die Folien 14, 16 übertragen. Im Falle eines undichten Prüflings 12 verändert sich die Kontur der Folienoberflächen der Folien 14, 16, weil Gas aus dem undichten Prüfling 12 entweicht und sich dadurch dessen Kontur verändert. Die Veränderung der Kontur der Folien 14, 16 verändert die Form des auf die Folien 14, 16 projizierten Gitters 28. Diese Veränderung der Form des Gitters 28 ist in den von dem Bilderfassungssystem 26 aufgenommenen Bildern 30, 32 erkennbar.

Die aufgenommenen Bilder 30 werden mit zuvor aufgenommenen Referenzbildern 32 im Fall eines dichten Prüflings 12 beziehungsweise im Fall entsprechender mehrerer dichter Prüflinge 12 verglichen. Entscheidend ist, dass die Referenzbilder 32 für dieselbe Anzahl und Anordnung der Prüflinge 12 wie für den Fall der Dichtheitsmessung aufgenommen wurden. Durch einen Vergleich der Form der Gitter 28 in den aufgenommenen Bildern 30 mit der Form der Gitter 28 in den Referenzbildern 32 kann ein Soll-Ist-Vergleich durchgeführt werden und beispielsweise bei Überschreiten einer vorgegebenen Abweichung von den Konturen in den Referenzbildern 32 auf ein Leck geschlossen werden.

Das Bilderfassungssystem 26 ist hierzu mit einer Bildverarbeitungs- und Bilderkennungssoftware versehen. Anhand bekannter Bilderkennungsalgorithmen erfolgt die Auswertung der aufgenommenen Bilder. Insbesondere ist damit erkennbar, welcher von mehreren in der Folienkammer enthaltenen Prüflingen 12 undicht ist.

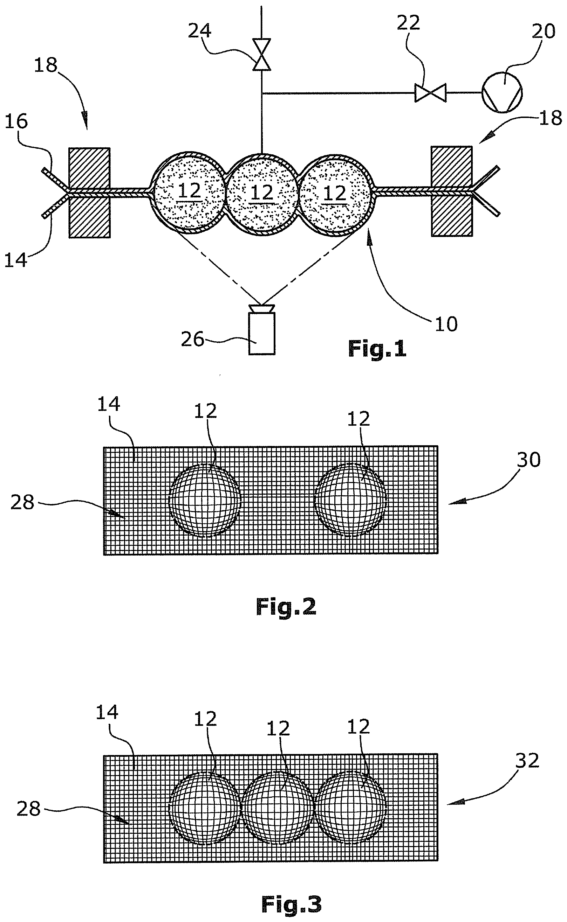

In Figur 2 ist das Bild 30 des Gitters 28 für den Fall eines undichten Prüflings 12 von mehreren Prüflingen 12 dargestellt.

Figur 3 zeigt das zuvor aufgenommene Referenzbild 32 des Gitters 28 bei selber Anzahl und Anordnung der Prüflinge 12 wie in Figur 2 für den Fall dichter Prüflinge 12. Die in Figur 3 dargestellte Situation dient als Referenz für dichte Prüflinge 12, das heißt zur Aufnahme eines Referenzbildes 32, welches zu einem späteren Vergleich mit den während der Leckdetektion aufgenommenen Bildern 30 verglichen wird. Durch Vergleich der Konturen und Gitter 28 in den Figuren 2 und 3 ist auf Anhieb erkennbar, welcher der Prüflinge 12 undicht ist, nämlich der mittlere Prüfling 12.

## Patentansprüche

1. Verfahren zur Lecksuche an mindestens einem flexiblen Prüfling (12) in einer Folienkammer (10), mit den Schritten:
Einbringen des mindestens einen flexiblen Prüflings (12) in eine Folienkammer (10) mit mindestens einer Folie (14, 16),
Absenken des Drucks in der Folienkammer (10) außerhalb des mindestens einen flexiblen Prüflings (12) und
Detektion eines Lecks in dem mindestens einen flexiblen Prüfling (12) durch
Beobachtung der räumlichen Veränderung der mindestens einen Folie (14, 16) der Folienkammer (10),
Ubertragen der äußeren Kontur des mindestens einen flexiblen Prüflings (12) durch
das Absenken des Drucks in der Folienkammer (10) auf zumindest einen Abschnitt der mindestens einen Folie (14, 16),
Erfassen dieser Kontur der mindestens einen Folie (14, 16) mit einem Bilderfassungssystem 26), die zum Aufnehmen von Bildern der Folienkontur ausgebildet ist, und
Vergleichen der erfassten Bilder (30) der Kontur mit Referenzbildern (32) dieser Kontur im Falle dichter , flexibler Prüflinge (12),
**dadurch gekennzeichnet,**
**dass** der von dem Bilderfassungssystem (26) aufgenommene Abschnitt der mindestens einen Folie (14, 16) mit einem Gitter (28), bei dem es sich um in einem Raster angeordnete Punkte handeln kann, versehen ist, dessen Position beobachtet und ausgewertet wird.

2. Verfahren nach Anspruch 1, **dadurch gekennzeichnet, dass** das Gitter (28) aus einander kreuzenden Linien oder Punkten auf der Folienoberfläche der mindestens einen Folie (14, 16) besteht.

3. Verfahren nach Anspruch 1 oder 2, **dadurch gekennzeichnet, dass** das Gitter (28) auf die Folienoberfläche der mindestens einen Folie (14, 16) projiziert wird.

4. Verfahren nach Anspruch 1 oder 2, **dadurch gekennzeichnet, dass** das Gitter (28) fest auf die Folienoberfläche der mindestens einen Folie (14, 16) aufgetragen ist.

5. Verfahren nach einem der vorhergehenden Ansprüche, **dadurch gekennzeichnet, dass** der zeitliche Verlauf der Änderung der Folienkontur der mindestens einen Folie (14, 16) als Maß für die Leckrate ausgewertet wird.

6. Verfahren nach einem der vorhergehenden Ansprüche, **dadurch gekennzeichnet, dass** mehrere flexible Prüflinge (12) zugleich in der Folienkammer (10) enthalten sind.

## Claims

1. A method for leak detection on at least one flexible test piece (12) in a film chamber (10), comprising the following steps:
introducing the at least one flexible test piece (12) into a film chamber (10) with at least one film (14, 16),
lowering the pressure in the film chamber (10) outside the at least one flexible test piece (12), and
detecting a leak in the at least one flexible test piece (12) by monitoring the spatial change of the at least one film (14, 16) of the film chamber (10),
transferring the outer contour of the at least one flexible test piece (12) to at least one portion of the at least one film (14, 16)by lowering the pressure in the film chamber (10),
capturing said contour of the at least one film (14, 16) by means of an image capturing device (26) which is adapted to capture images of the film contour, and
comparing the captured images (30) of the contour with reference images (32) of said contour in the case of tight flexible test pieces (12),
**characterized in that**
the portion of the at least one film (14, 15) captured by the image capturing device (26) is provided with a grid (28), which may be dots arranged in a pattern, the position of which is monitored and evaluated.

2. The method according to claim 1, **characterized in that** the grid (28) is formed of intersecting lines or dots on the film surface of the at least one film (14, 16).

3. The method according to claim 1 or 2, **characterized in that** the grid (28) is projected on the film surface of the at least one film (14, 16).

4. The method according to claim 1 or 2, **characterized in that** the grid (28) is fixedly applied onto the film surface of the at least one film (14, 16).

5. The method according to one of the preceding claims, **characterized in that** the temporal course of a change of the film contour of the at least one film (14, 16) is evaluated as a measure of the leakage rate.

6. The method according to one of the preceding claims, **characterized in that** a plurality of flexible test pieces (12) is contained in the film chamber (10) at the same time.

## Revendications

1. Procédé de détection de fuite sur au moins un échantillon flexible (12) dans une chambre à membrane (10), avec les étapes :
introduire ledit au moins un échantillon flexible (12) dans une chambre à membrane (10) comportant au moins une membrane (14, 16),
baisser la pression dans la chambre à membrane (10) à l'extérieur dudit au moins un échantillon flexible (12) et
détecter une fuite sur ledit au moins un échantillon flexible (12) par observation du changement dans l'espace de ladite au moins une membrane (14, 16) de la chambre à membrane (10),
transposer les contours extérieurs dudit au moins un échantillon flexible (12), par l'abaissement de la pression dans la chambre à membrane (10), sur au moins une zone de ladite au moins une membrane (14, 16),
saisir ces contours de ladite au moins une membrane (14, 16) à l'aide d'un système de capture d'image (26) qui est configuré pour la saisie d'images des contours de membrane et
comparer les images saisies (30) des contours avec des images de référence (32) de ces contours dans le cas d'échantillons flexibles étanches,
**caractérisé en ce que** la zone de ladite au moins une membrane (14, 16) saisie par le système de capture d'image (26) est pourvue d'une grille (28) qui peut être constituée de points disposés dans un réseau dont la position est observée et exploitée.

2. Procédé selon la revendication 1, **caractérisé en ce que** la grille (28) est constitue de lignes se croisant les unes les autres ou de points sur la surface de la membrane de ladite au moins une membrane (14, 16).

3. Procédé selon la revendication 1 ou 2, **caractérisé en ce que** la grille (28) est projetée sur la surface de la membrane de ladite au moins une membrane (14, 16).

4. Procédé selon la revendication 1 ou 2, **caractérisé en ce que** la grille (28) est posée fermement sur la surface de la membrane de ladite au moins une membrane (14, 16).

5. Procédé selon l'une des revendications précédentes, **caractérisé en ce que** le déroulement dans le temps du changement des contours de la membrane de ladite au moins une membrane (14, 16) est pris comme mesure pour le taux de fuite.

6. Procédé selon l'une des revendications précédentes, **caractérisé en ce que** plusieurs échantillons flexibles (12) sont contenus en même temps dans la chambre à membrane (10).
